# EUROPÄISCHE PATENTANMELDUNG

(11) **EP 4 751 878 A1**
(43) Veröffentlichungstag der Anmeldung: **03.06.2026**
(21) Anmeldenummer: 25212095.1
(22) Anmeldetag: 29.10.2025
(51) Int. Cl.: B29C 55/06, B29C 55/14

(54) **VERFAHREN ZUR HERSTELLUNG EINER FOLIE SOWIE ANLAGE HIERZU**

(30) Priorität: 11.11.2024 DE 102024132907
(71) Anmelder: Brückner Maschinenbau GmbH, 83313 Siegsdorf (DE)
(72) Erfinder: Mayr (geb. Wagner), Christina, 83435 Bad Reichenhall (DE); LUND, Roland, 83236 Übersee (DE)
(74) Vertreter: Flach Bauer & Partner Patentanwälte mbB

(57) **Zusammenfassung**

Ein Verfahren zum Herstellen einer Folie (A) hat die folgenden Schritte:
- Erzeugen einer Folie (A), die wenigstens eine Lage mit 70 Gew.-% eines oder mehrerer Polypropylene und zwischen 10 Gew.-% und 30 Gew.-% eines oder mehrerer Cycloolefinpolymere aufweist, und
- Längsrecken der Folie (A) mittels einer Längsreckanlage (16) mit wenigstens einem Paar an Reckwalzen (40), wobei ein Hauptreckspalt (S₁) zwischen den Reckwalzen (40) des wenigstens einen Paares an Reckwalzen (40) gebildet ist, wobei der Hauptreckspalt (S₁) eine Größe von wenigstens 30 mm hat.

Ferner ist eine Anlage (10) zur Herstellung einer Folie (A) gezeigt.

## Beschreibung

Die Erfindung betrifft ein Verfahren zur Herstellung einer Folie sowie eine Anlage zur Herstellung einer Folie.

In Folienkondensatoren werden üblicherweise biaxial verstreckte Folien aus Polypropylen (PP) verwendet. Zur Steigerung der Temperaturfestigkeit von Polypropylenfolien ist es bekannt, einen Blend aus Polypropylen und Cycloolefinpolymeren (COC) zu verwenden.

Die Herstellung solcher Folien aus PP und COC ist jedoch mit besonderen Schwierigkeiten verbunden, da die Cycloolefinpolymere aufgrund ihrer hohen Glasübergangstemperatur eine hohe Sprödigkeit aufweisen, sodass eine biaxiale Verstreckung nur schwer bzw. nicht möglich ist.

Aus diesem Grund können solche Folien mit sehr geringen Dicken, z.B. von unter 5 µm, nur mittels simultaner Verstreckung in Längs- und Querrichtung erzeugt werden, wodurch diese unter anderem sehr teuer sind und die Verfügbarkeit eingeschränkt ist.

Es ist daher wünschenswert, eine solche Folie, die Polypropylen und Cycloolefinpolymer aufweist, mittels eines sequentiellen Verstreckungsverfahrens herzustellen.

Es ist somit Aufgabe der Erfindung, ein Verfahren zum Herstellen einer Folie mit Cycloolefinpolymeranteil sowie eine Anlage hierzu bereitzustellen, die die Herstellung von solchen Folien mittels sequentiellen Verstreckens ermöglichen.

Die Aufgabe wird gelöst durch ein Verfahren zum Herstellen einer Folie. Das Verfahren umfasst wenigstens die folgenden Schritte:
- Erzeugen einer Folie, die wenigstens eine Lage mit 70 Gew.- % eines oder mehrerer teilkristalline alpha-Olefinpolymere und zwischen 10 Gew.-% und 30 Gew.-% eines oder mehrerer Cycloolefinpolymere aufweist, und
- Längsrecken der Folie mittels einer Längsreckanlage mit wenigstens einem Paar an Reckwalzen, wobei ein Hauptreckspalt zwischen den Reckwalzen des wenigstens einen Paares gebildet ist, wobei der Hauptreckspalt eine Größe von wenigstens 30 mm hat.

Die Erfinder haben erkannt, dass eine Vergrößerung des Hauptreckspalts um eine Größenordnung von üblicherweise wenigen Millimetern auf 30 mm oder mehr in der Längsreckanlage dazu führt, dass spröde Folien aus einer Mischung von alpha-Olefinpolymeren, z.B. Polypropylen, und Cycloolefinpolymeren auf diese Weise auch sequentiell verstreckt werden können. Der um wenigstens eine Größenordnung vergrößerte Hauptreckspalt führt zu einer Reduzierung der Dehngeschwindigkeit bei der Längsreckung über den Hauptreckspalt, wodurch eine schonendere Längsreckung erreicht wird, die eine deutliche Steigerung des Reckverhältnisses in der Längsreckanlage ermöglicht.

Insbesondere entspricht die Größe eines Reckspalts zwischen zwei Reckwalzen, in Bezug auf eine Tangente für beide Reckwalzen, der Länge der Tangente zwischen den Berührungspunkten der Tangente mit den Reckwalzen. Insbesondere verläuft die Folie in der Richtung der Tangente.

Beispielsweise ist das eine oder die mehreren teilkristallinen alpha-Olefinpolymere ein oder mehrere Polypropylene.

In einer Ausgestaltung weist die Folie wenigstens 75 Gew.-% des einen oder der mehreren teilkristallinen alpha-Olefinpolymere und zwischen 15 Gew.-% und 25 Gew.-% des einen oder der mehreren Cycloolefinpolymere auf, wodurch hohe Reckverhältnisse besonders zuverlässig erreicht werden.

Die Summe der Teile des einen oder der mehreren alpha-Olefinpolymere und des einen und der mehreren Cycloolefinpolymere liegt beispielsweise bei mehr als 95 Gew.-%, insbesondere bei 100 Gew.-%. Der Anteil des oder der mehreren alpha-Olefinpolymere an der Folie kann in diesem Fall 70 Gew.-% bis 90 Gew.-% betragen.

Die Folie kann ein-, zwei-, drei- oder mehrlagig sein. Genau eine, mehrere oder alle der Lagen weisen wie zuvor beschrieben ein oder mehrere alpha-Olefinpolymere, insbesondere ein oder mehrere Polypropylene, und ein oder mehrere Cycloolefinpolymere auf.

In einer Ausführungsform weist die Längsreckanlage ein zweites Paar an Reckwalzen auf, wobei ein Nebenreckspalt zwischen den Reckwalzen des zweiten Paares gebildet ist, wobei der Nebenreckspalt eine geringere Größe als der Hauptreckspalt hat. Die Folie wird beim Längsrecken zunächst über den Hauptreckspalt und anschließend über den Nebenreckspalt in seine Längsrichtung gereckt, oder umgekehrt. Auf diese Weise werden höhere Reckverhältnisse erreicht.

Für die Erzielung besonders großer Reckverhältnisse kann der Hauptreckspalt eine Größe von 50 mm und mehr, insbesondere von 100 mm und mehr haben.

Der Nebenreckspalt kann eine Größe von 4 mm und weniger, insbesondere von 2 mm und weniger haben, wodurch das Herstellungsverfahren besonders stabil ist.

In einer Ausgestaltung ist das Reckverhältnis in Längsrichtung über den Hauptreckspalt größer oder gleich 3,4, insbesondere größer oder gleich 3,6, insbesondere größer oder gleich 4,0, insbesondere größer oder gleich 4,5, wodurch besonders dünne Folien erzeugt werden können.

In einem Aspekt ist das Reckverhältnis in Längsrichtung über den Nebenreckspalt kleiner oder gleich 2 ist, insbesondere kleiner oder gleich 1,5 ist, insbesondere kleiner oder gleich 1,2, wodurch das Herstellungsverfahren besonders zuverlässig ist.

Beispielsweise ist das Reckverhältnis des gesamten Längsreckens größer als 3,5, insbesondere größer als 4,0, weiter insbesondere größer oder gleich 5,0.

In einer Ausgestaltung ist die Folie frei von Additiven oder Antiblockmitteln, die zur Reduzierung des Blockierens der Folien dienen könnten, wodurch die dielektrischen Eigenschaften der Folie besonders gut sind.

Unter dem Blockieren (sog. "Blocking") der Folie wird insbesondere verstanden, dass die Oberflächen der Folien mit anderen Folien oder miteinander in Kontakt kommen, zum Beispiel beim Aufwickeln, und dabei aneinanderhaften, wodurch Probleme bei der weiteren Verarbeitung, insbesondere dem Abwickeln, entstehen.

Als optionale Ausgestaltung ist es denkbar, dass die Folie ein oder mehrere Antiblockmittel zur Reduzierung des Blockierens aufweist. Diese Antiblockmittel verringern die Adhäsion der Folie mit sich oder anderen Oberflächen und wirken daher dem Blockieren entgegen. Als Antiblockmittel sind zum Beispiel Feststoffe bekannt, die als Abstandshalter an der Oberfläche der Folie fungieren.

Ein Verblocken der mit dem erfindungsgemäßen Verfahren hergestellten Folie wird beispielsweise durch eine spezifische Oberflächenstruktur vermieden. Diese Oberflächenstruktur kann mithilfe der Prozesstemperaturen, insbesondere durch gezielte Temperierung der Kühlwalze sowie der Längsreckanlage, generiert werden. Bedingt durch die Oberflächenstruktur kann eine Oberflächenrauheit (Ra / Rmax) generiert werden, durch welche ein Verblocken vermieden wird und folglich eine Weiterverarbeitung der Folie möglich ist. Mithilfe der Oberflächenstruktur bzw. -Rauheit ist die Verwendung von Antiblockmitteln bei dieser Ausführung nicht notwendig.

In einem Aspekt ist wenigstens eines, mehrere oder alle der Polypropylene teilkristallin und/oder ein Homopolymer.

Beispielsweise können als teilkristallinen alpha-Olefinpolymere die kommerziell verfügbaren Typen wie Borclean^{®} (z.B. HC300BF, HC318BF) der Firma Borealis oder solche der Firma The Polyolefin Company (TPC), Singapur, der Firma KPIC - Korea Petrochemical Ind. Co., LTD oder der Firma "Prime Polymer" verwendet werden.

In einem Aspekt sind wenigstens eines, mehrere oder alle der Cycloolefinpolymere amorph, haben eine Glasübergangstemperatur zwischen 130°C und 180°C, und/oder enthalten Norbornen und Ethylen als Monomere.

Die Glasübergangstemperatur wird gemäß ISO 11357 per DSC mit einer Aufheizgeschwindigkeit von 10K/min gemessen.

Beispielsweise können als Cycloolefinpolymer die COC-Typen 6013 S04, 6013 M07, 6015 S04 oder 6017 S04 der Firma Topas Advanced Polymers, die COC-Typen APL 5014CL, APL5015AL, APL5016SL oder APL 6015 T der Firma Mitsui Chemicals, die COP-Typen Zenor 1420R, Zenor 1410R, Zeonex 162R, Zeonex 690R oder Zeonex 790R der Firma Zeon, ViViOn CBC der Firma USI Corporation, Taiwan, oder die COC-Typen Arton der Firma JSR Corporation verwendet werden.

Auch ist es denkbar, verschiedene Cycloolefinpolymere zu mischen, wie in der EP 4 174 120 beschrieben.

In einer Ausgestaltung weist die Längsreckanlage einen Vorheizbereich auf, wobei die Temperatur im Vorheizbereich gleich oder größer als 110°C, insbesondere gleich oder größer als 120°C ist, und/oder gleich oder kleiner als 155°C, insbesondere gleich oder kleiner als 145°C ist; und/oder die Längsreckanlage weist einen Reckbereich auf, wobei die Temperatur im Reckbereich gleich oder größer als 140°C, insbesondere gleich oder größer als 150°C ist, und/oder gleich oder kleiner als 165°C, insbesondere gleich oder kleiner als 155°C ist. Diese Temperaturen, die gegenüber üblichen Temperaturen zur Herstellung von reinen Polypropylenfolien höher liegen, liegen über den Glasübergangstemperaturen der Cycloolefinpolymere und führen zu einer verbesserten Verstreckung.

Als Temperatur der entsprechenden Bereiche wird beispielsweise die Temperatur der Walzen in den entsprechenden Bereichen verstanden.

Zur weiteren Verbesserung der Wirtschaftlichkeit, kann die Folie nach der Längsreckanlage mit einer Laufgeschwindigkeit zwischen 100 m/min und 400 m/min gefördert werden.

In einer Ausführungsform umfasst das Verfahren zusätzlich Folgendes:
- Fördern der Folie von der Längsreckanlage zu einer Querreckanlage, und
- Querrecken der Folie in der Querreckanlage,
insbesondere wobei die Folie nach dem Querrecken eine Breite von 5 m bis 13 m und/oder eine Dicke von weniger als 5 µm, insbesondere von gleich oder weniger als 4 µm hat. Auf diese Weise kann das Flächenreckverhältnis deutlich gesteigert werden.

Die Dicke der Folie ist beispielsweise größer oder gleich 2 µm, insbesondere ist die Folie 3,8 µm dick.

Die Folie weist zum Beispiel einen Wärmeschrumpf in Längsrichtung von höchstens 5%, insbesondere höchstens 2,5%, und in Querrichtung von höchstens 0,5%, insbesondere höchstens 0,05% auf, gemessen nach ISO 11501 bei 120°C nach 5 Minuten.

In einer Ausgestaltung liegt das Reckverhältnis in Querrichtung der Querreckanlage bei gleich oder mehr als 8, insbesondere bei gleich oder mehr als 8,5, und/oder bei gleich oder weniger als 10, insbesondere bei gleich oder weniger als 9,5, insbesondere liegt das Reckverhältnis in Querrichtung der Querreckanlage bei 9, wodurch ein zuverlässiges Herstellungsverfahren bei hohem Flächenreckverhältnis erzielt wird.

Das gesamte Reckverhältnis liegt beispielsweise bei mehr als 35, insbesondere bei mehr als 40.

In einer Ausführungsform weist die Querreckanlage einen Ofen zum Vorheizen der Folie vor dem Querrecken auf, insbesondere wobei die Temperatur in der Reckzone des Ofens zumindest abschnittsweise zwischen 170°C und 175°C ist. Auf diese Weise wird der Herstellungsprozess noch stabiler.

Die Temperatur entspricht der Temperatur in der Reckzone des Ofens.

Um ein Verblocken der Folie zuverlässig zu vermeiden, kann die Folie, insbesondere nach dem Querrecken, einen Mittenrauwert zwischen 0,05 µm und 0,12 µm, insbesondere zwischen 0,06 µm und 0,09 µm aufweisen. Dieser kann über eine taktile Messung mit einem Messgerät der Firma Mahr als gerichtete Messung in Querrichtungen ermittelt werden.

In einer Ausführungsform umfasst das Verfahren zusätzlich Folgendes:
- Extrudieren der Folie auf eine Kühlwalze, und
- Fördern der Folie von der Kühlwalze zur Längsreckanlage,
insbesondere wobei die Kühlwalze temperiert ist auf eine Temperatur im Bereich von 80°C bis 100°C, insbesondere im Bereich von 90°C bis 95°C. Durch Temperierung der Kühlwalze kann die Rauheit der Folie eingestellt werden.

Für eine Weiterverarbeitung der Folie kann das Verfahren zusätzlich zumindest eines der Folgenden umfassen:
- Aktivieren der Oberfläche mittels Coronabehandlung, und/oder
- Aufwickeln der Folie.

Insbesondere erfolgt dies nach dem Längs- und/oder Querrecken der Folie.

Die Coronabehandlung kann einseitig oder beidseitig erfolgen.

Die Metallisierung kann in einem zusätzlichen Schritt, insbesondere offline, ein- oder doppelseitig auf die vollständig verstreckte Folie aufgebracht werden.

Die Metallisierung kann einseitig oder beidseitig auf die Oberfläche der Folie aufgebracht werden. Insbesondere kann die Metallisierung aus einem Metall oder einer Metalllegierung gebildet sein. Zudem kann die Metallisierung einschichtig oder mehrschichtig aufgetragen sein, wobei unterschiedliche Schichten eine unterschiedliche Zusammensetzung aufweisen können.

In einem Aspekt umfasst die Metallisierung Aluminium, Zink, Gold, Silber, Magnesium oder geeignete Legierungen der vorstehend genannten Materialien. Die Dicke der Metallisierung kann beispielsweise in einem Bereich von 10 nm bis 100 nm liegen. Weiterhin kann die Metallisierung strukturiert sein.

Insbesondere kann eine entsprechend metallisierte Folie als Kondensatorfolie eingesetzt werden. Die zumindest eine Elektrode des Kondensators kann durch die Metallisierung gebildet sein oder die Metallisierung umfassen.

Ebenso ist es möglich, dass beide Elektroden des Kondensators durch entsprechende Metallisierungen gebildet werden, oder eine entsprechende Metallisierung umfassen.

Ferner wird die Aufgabe gelöst durch eine Anlage zur Herstellung einer Folie, mit einer Längsreckanlage, wobei die Längsreckanlage, insbesondere die gesamte Anlage, dazu eingerichtet ist, ein Verfahren wie zuvor beschrieben durchzuführen.

Die zum Verfahren beschriebenen Merkmale und Vorteile gelten gleichermaßen für die Anlage und umgekehrt.

Die Anlage weist beispielsweise zudem eine Extrusionsanlage, eine Casting-Unit, eine Querreckanlage (TDO, "Transverse Direction Orienter"), eine Behandlungseinrichtung (z.B. zur Coronabehandlung), und/oder eine Wickelvorrichtung auf.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Fig. 1: eine schematische Ansicht einer Anlage gemäß einer Ausführungsform der Erfindung,
- Fig. 2: eine schematische Ansicht der Längsreckanlage der Anlage gemäß Figur 1,
- Fig. 3: eine Prinzipdarstellung des Reckwerks der Längsreckanlage gemäß Figur 2,
- Fig. 4: ein Flussdiagramm eines Verfahren gemäß einer Ausführungsform der Erfindung, und
- Fig. 5: ein Diagramm der Dehngeschwindigkeit in Abhängigkeit der Größe des Reckspalts.

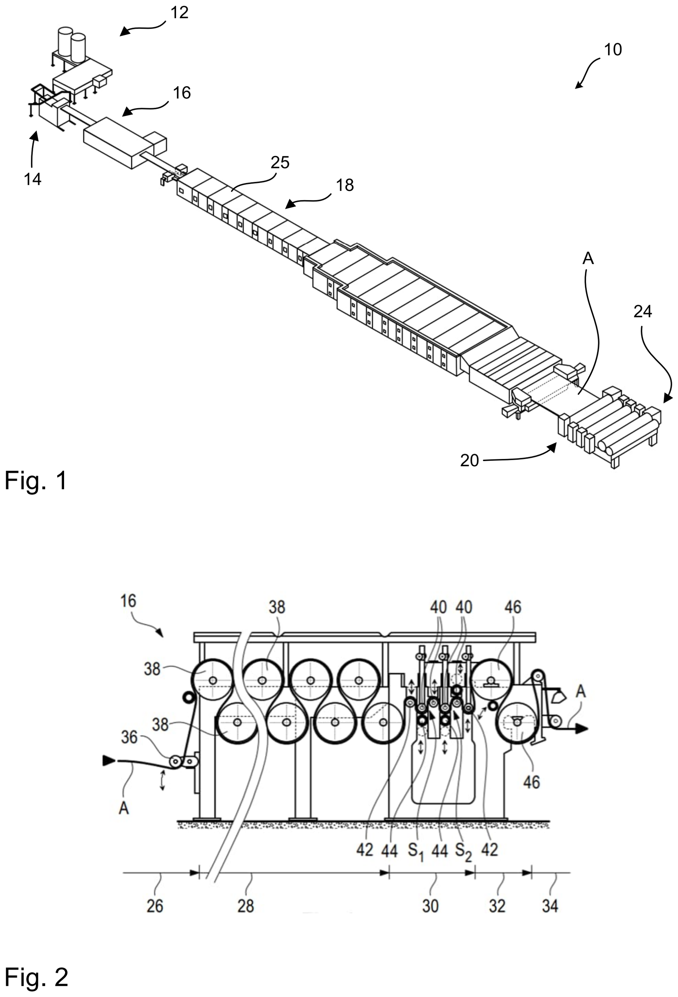

In Figur 1 ist äußerst schematisch eine Anlage 10 zur Herstellung einer Folie A dargestellt, die mehrere verschiedene Anlagen und Vorrichtungen umfasst.

Die Anlage 10 ist beispielsweise eine Folienherstellungsanlage zur Herstellung einer Folie, beispielsweise einer Kondensatorfolie, anhand der - ohne Beschränkung des Schutzbereichs - die Erfindung beispielhaft erläutert wird.

Im gezeigten Beispiel weist die Anlage 10 eine Extrusionsanlage 12, eine Casting-Unit 14, zumindest eine Längsreckanlage 16 (MDO, "Machine Direction Orienter"), eine Querreckanlage 18 (TDO, "Transverse Direction Orienter"), eine Behandlungseinrichtung 20 sowie eine Wickelvorrichtung 24 auf.

Die Extrusionsanlage 12 weist einen Extruder auf und ist dazu eingerichtet, aus wenigstens einem Ausgangsprodukt eine Schmelze zu erzeugen, die auf eine Kühlwalze der Casting-Unit 14 aufgetragen wird, wodurch eine Folie A erzeugt wird.

Die erzeugte Folie kann eine oder mehrere Lagen aufweisen. Denkbar ist bei einer mehrlagigen Folie, dass ein Extruder mehrere oder alle Lagen erzeugt, oder dass für jede Lage ein Extruder vorgesehen ist.

Beispielsweise ist der Extruder oder sind die Extruder ein Einschneckenextruder, Kaskadenextruder und/oder Doppelschneckenextruder.

Denkbar ist auch, dass andere Misch- und Aufbereitungsaggregate, wie ein Buskneter oder ein Planetwalzenextruder verwendet werden.

Die in der Casting-Unit 14 enthaltene Kühlwalze ist temperiert.

Die Querreckanlage 18, wie sie beispielsweise in der DE 10 2021 128 332 A1 beschrieben ist, hat entlang der üblichen Bewegungs- bzw. Abzugsrichtung der Anlage 10 einen Ofen 25 mit verschiedenen Zonen zur Temperierung der Folie.

Die Querreckanlage 18 hat ein Antriebssystem für die Folie A mit zwei Transportschienen, um die Folie durch die verschiedenen Zonen zu fördern. An jeder der Transportschienen sind in an sich bekannter Weise eine Vielzahl von Kluppeneinheiten geführt.

Die Kluppeneinheiten können die Folie A greifen und durch einen geeigneten Antrieb entlang der Transportschiene bewegt werden, sodass die Folie A durch die Querreckanlage 18 gefördert wird.

In der ersten Zone, auch Vorheizzone genannt, wird die Folie erwärmt. In der anschließenden zweiten Zone ("Reckzone") wird die Folie in Querrichtung gereckt, sodass sie zum Ende der zweiten Zone eine größere Breite und geringere Dicke aufweist als zu Beginn. Die Reckung erfolgt dadurch, dass der Abstand der Schienen des Antriebssystems in der Reckzone vergrößert wird.

In der dritten und weiteren Zonen ("Wärmebehandlungszone", "Weiterheizzone" und/oder "Annealingzone" genannt) kann beispielsweise eine Relaxierung der Folie bei hohen Temperaturen erfolgen.

In der letzten Zone ("Kühlzone") wird die Folie abgekühlt.

Eine weitere Zone wird Neutralzone genannt und dient zur Trennung von Zonen. Die Neutralzone ist beispielsweise ein leerer Raum ohne Belüftung. Die Neutralzone kann sich zwischen den jeweiligen vorher beschriebenen Zonen befinden, zum Bespiele zwischen der Annealingzone und der Kühlzone.

Eine solche Querreckanlage 18 ist beispielsweise aus der WO 2014/094803 A1 bekannt.

Die Zonen der Querreckanlagen 18 können auch anders aufgeteilt sein und/oder in ihrer Länge anders ausgeführt sein. Zum Beispiel können weniger oder kürzere Neutralzonen vorgesehen sein oder die Neutralzonen können an anderen Stellen, auch zusätzlich, angeordnet sein. Auch Änderungen an den übrigen Zonen sind denkbar.

Die Behandlungsvorrichtung 20 ist beispielsweise eine Vorrichtung zur Aktivierung der Oberfläche der Folie A durch eine Coronabehandlung, beispielsweise um eine bessere Metallhaftung zu realisieren. Die Coronabehandlung kann einseitig oder beidseitig erfolgen.

Die Wickelvorrichtung 24 dient zum Aufwickeln der erzeugten Folie A und ist die in Abzugsrichtung letzte Vorrichtung. Sie weist eine Wickelhülse auf, auf der die Folie A aufgewickelt wird.

Figur 2 zeigt die Längsreckanlage 16 in einer schematischen Seitenansicht. Die Längsreckanlage 16 weist einen Zuführbereich 26, einen Vorheizbereich 28, einen Reckbereich 30, einen Wärmebehandlungsbereich 32 sowie einen Abfuhrbereich 34 auf.

In dem Zuführbereich 26 ist zumindest eine Tänzerrolle 36 vorgesehen, die die Folie A empfängt und zum Vorheizbereich 28 führt.

Die Tänzerrolle 36 dient dazu, den Folienzug einzustellen.

Der Vorheizbereich 28 weist mehrere Vorheizwalzen 38 auf.

Die Oberflächen der Vorheizwalzen 38 sind beispielsweise keramisch, chromiert oder teflonisiert, wobei im gezeigten Ausführungsbeispiel zu Beginn des Vorheizbereichs 28 chromierte Vorheizwalzen 38 zum Einsatz kommen und im weiteren Verlauf in Abzugsrichtung teflonisierte Vorheizwalzen 38.

Die Oberflächen der Vorheizwalzen 38, aber auch jeder anderen Walze, können kontrolliert erwärmt werden, um die Folie A nach Verlassen der letzten Vorheizwalze 38 auf eine bestimmte Temperatur erwärmt zu haben. Diese Temperatur der Folie A wird im Rahmen dieser Offenbarung auch als die Temperatur des Vorheizbereich 28 bezeichnet.

In Abzugsrichtung an den Vorheizbereich 28 anschließend befindet sich der Reckbereich 30, in der zumindest ein Paar an Reckwalzen 40 angeordnet ist. In dem gezeigten Beispiel weist die Längsreckanlage 16 in dem Reckbereich 30 vier Reckwalzen 40 auf, die zwei Paare von Reckwalzen 40 bilden.

Zudem können im Reckbereich 30 mehrere Führungsrollen 42 und Anpressrollen 44 vorgesehen sein.

Im gezeigten Ausführungsbeispiel ist in Abzugsrichtung vor bzw. hinter den Paaren an Reckwalzen 40 jeweils eine Führungsrolle 42 vorgesehen, um die Folie A aus dem Vorheizbereich 28 zu empfangen bzw. die Folie A an den Wärmebehandlungsbereich 32 zu übergeben.

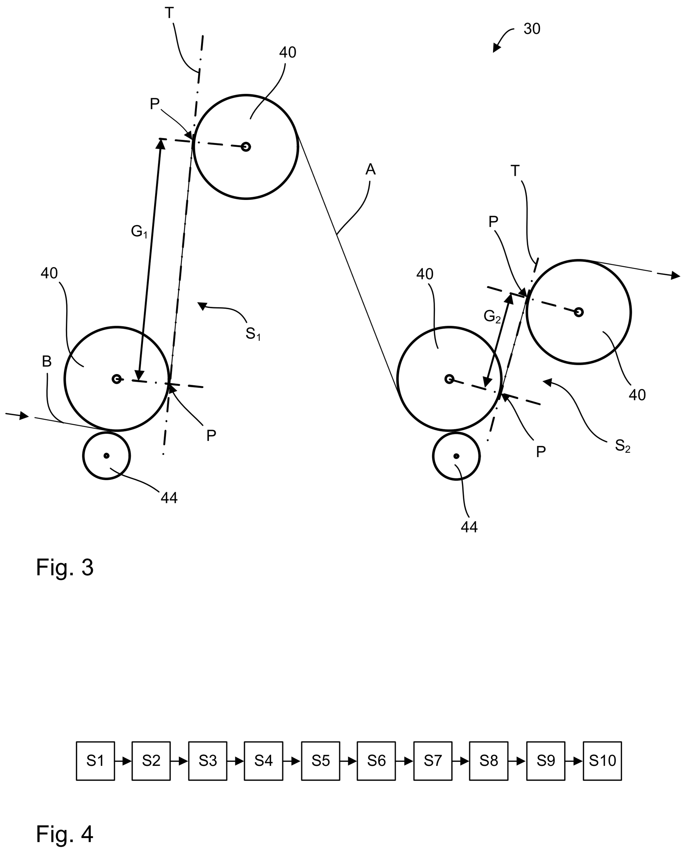

In Figur 3 ist der Reckbereich 30 im Bereich der Reckwalzen 40, also das Reckwerk, als Prinzipdarstellung detaillierter dargestellt.

Zu erkennen ist, dass jeder der in Abzugsrichtung vorlaufenden Reckwalze 40 der Paare an Reckwalzen eine der Anpressrollen 44 zugeordnet ist, die die Folie A in an sich bekannter Weise an die zugeordnete Reckwalze 40 anpresst.

Die nachlaufende Reckwalze 40 jeder der Paare an Reckwalzen 40 ist beabstandet von der vorlaufenden Reckwalze 40 des Paares angeordnet.

Zwischen den beiden Reckwalzen 40 jedes Paares wird daher ein Reckspalt gebildet. Zwischen den Reckwalzen 40 des ersten Paares an Reckwalzen, d.h. des in Abzugsrichtung vorlaufenden Paares, ist ein Hauptreckspalt S₁ gebildet, und zwischen den Reckwalzen 40 des zweiten, d.h. nachlaufenden Paares an Reckwalzen 40 ist ebenfalls ein Reckspalt ausgebildet, der als Nebenreckspalt S₂ bezeichnet wird.

Die Größe jedes der Reckspalten S₁ und S₂ kann wie folgt bestimmt werden. In Seiten- bzw. Schnittansicht wird eine Tangente T entlang der Folienlaufbahn über den Reckspalt gelegt. Die Tangente T ist eine Tangente zu beiden der Reckwalzen 40 des entsprechenden Paares, sodass sie je einen Berührungspunkt P mit jeder der Reckwalzen 40 hat. Die Länge der Tangente T zwischen den beiden Berührungspunkten P ist nun die Länge des entsprechenden Reckspalts.

Der Hauptreckspalt S₁ hat eine Größe G₁ von wenigstens 30 mm, insbesondere von 50 mm oder mehr. Denkbar ist auch eine Größe G₁ von 100 mm und mehr.

Der Nebenreckspalt S₂ hat eine Größe G₂ von 4 mm und weniger, insbesondere von 2 mm und weniger.

Die Reckung einer Folie A über den Hauptreckspalt S₁ erfolgt dadurch, dass die Nachlaufende der beiden Reckwalzen 40 des ersten Reckwalzenpaares eine höhere Rotationsgeschwindigkeit hat, wodurch die Folie A über den Hauptreckspalt S₁ in Längsrichtung gestreckt wird. Dabei wird die Folie A länger und dünner und wird anschließend als Folie A bezeichnet.

Die Folie A wird über den Nebenreckspalt S₂ nochmals in Längsrichtung gereckt, sodass sie dünner und länger wird.

Die Temperatur in dem Reckbereich 30 kann ebenfalls kontrolliert werden und entspricht auch hier der Temperatur der Folie.

In dem Wärmebehandlungsbereich 32 sind, ähnlich zum Vorheizbereich 28, Heizwalzen 46 vorgesehen, die keramisch, chromiert bzw. teflonisiert sind, und deren Oberflächentemperatur kontrolliert werden kann. In dem Wärmebehandlungsbereich 32 findet ein Relaxieren und/oder Annealing der erzeugten Folie A statt.

Die beschriebene Anlage 10 ist dazu eingerichtet, das im Folgenden beschriebene Verfahren zur Herstellung einer Folie A durchzuführen.

Im Folgenden wird die Herstellung einer Folie A mit einer Lage bzw. Schicht beschrieben.

Es ist denkbar, dass eine mittels des erfindungsgemäßen Verfahrens hergestellte Folie auch mehrere gleiche oder verschiedene Lagen aufweisen kann, wobei zumindest eine Lage in dieser Folie wie im Folgenden beschrieben zusammengesetzt und hergestellt ist.

Das Ausgangsprodukt für die Extrusionsanlage 12 weist wenigstens 70 Gew.-% eines teilkristallinen alpha-Olefinpolymers, insbesondere eines Polypropylens und zwischen 10 Gew.-% und 30 Gew.-% eines Cycloolefinpolymers auf.

Denkbar ist ebenfalls, dass mehrere Polypropylene vorhanden sind, wobei die Summe der Polypropylene 70 Gew.-% oder mehr aufweist. Das Polypropylen, bzw. mehrere oder alle der Polypropylene sind Teilkristalline und/oder ein Homopolymer.

Beispielsweise können als teilkristallinen alpha-Olefinpolymere bzw. als Polymere die kommerziell verfügbaren Typen wie Borclean^{®} (z.B. HC300BF, HC318BF) der Firma Borealis oder solche der Firma "The Polyolefin Company (TPC), Singapur, der Firma KPIC - Korea Petrochemical Ind. Co., LTD oder der Firma "Prime Polymer" verwendet werden.

Ebenso ist es denkbar, dass mehrere Cycloolefinpolymere im Ausgangsprodukt vorhanden sind, wobei wenigstens eines, mehrere oder alle der Cycloolefinpolymere amorph sind, eine Glasübergangstemperatur zwischen 130°C und 180°C haben und/oder Norbornen und/oder Ethylen als Monomer enthalten. Die Summe der Cycloolefinpolymere beträgt zwischen 10 Gew.-% und 30 Gew.-%.

Die Glasübergangstemperatur wird gemäß ISO 11357 per DSC mit einer Aufheizgeschwindigkeit von 10K/min gemessen.

Beispielsweise können als Cycloolefinpolymer die COC-Typen 6013 S04, 6013 M07, 6015 S04, oder 6017 S04 der Firma Topas Advanced Polymers, die COC-Typen APL 5014CL, APL5015AL, APL5016SL oder APL 6015 T der Firma Mitsui Chemicals, die COP-Typen Zenor 1420R, Zenor 1410R, Zeonex 162R, Zeonex 690R oder Zeonex 790R der Firma Zeon, ViViOn CBC der Firma USI Corporation, Taiwan, oder die COC-Typen Arton der Firma JSR Corporation verwendet werden.

Insbesondere ist es denkbar, verschiedene Cycloolefinpolymere zu mischen, wie in der EP 4 174 120 beschrieben.

Das eine oder die mehreren Polypropylene zusammen mit den einen und den mehreren Cycloolefinpolymeren machen beispielsweise mehr als 95 Gew.-%, insbesondere 100 Gew.-% des Ausgangsproduktes aus.

Denkbar ist, dass das Ausgangsprodukt wenigstens 75 Gew.-% des einen oder der mehreren Polypropylene und zwischen 15 Gew.-% und 25 Gew.-% des einen oder der mehreren Cycloolefinpolymere hat.

Das Ausgangsprodukt ist frei von Additiven, die üblicherweise zur Reduzierung des Blockierens der Folie verwendet werden. Es weist also keine Feststoffe auf, die eine Rauigkeit an der Oberfläche der Folie erzeugen werden. Ein solches Ausgangsprodukt wird zunächst bereitgestellt (S1) und der Extrusionsanlage 12 zugeführt.

Das Ausgangsprodukt kann als Compound vorliegen, bei dem das eine oder die mehreren alpha-Olefinpolymere zusammen mit dem einen oder den mehreren Cycloolefinpolymere in dem entsprechenden Mischungsverhältnis bereits vermischt sind. Das Compound selbst kann ein Granulat sein.

Denkbar ist auch, dass das Ausgangsprodukt nicht als vorgemischtes Compound vorliegt, sondern als Mischung von Granulaten der einzelnen Inhaltsstoffe. Die verschiedenen Granulate können dabei durch den Lieferanten des Ausgansproduktes gemischt werden oder sie werden erst durch den Betreiber der Anlage 10 vermischt, beispielsweise beim Befüllen der Extrusionsanlage 12.

Anschließend wird das Ausgangsprodukt durch die Extrusionsanlage 12 aufgeschmolzen, vermengt und als Schmelze auf die Kühlwalze der Casting-Unit 14 extrudiert (S2). Die Kühlwalze ist dabei temperiert auf eine Temperatur im Bereich von 80°C bis 100°C, insbesondere im Bereich von 90°C bis 95°C (S3).

Durch die Temperierung der Kühlwalze kann die Rauigkeit der hergestellten Folie A kontrolliert werden. Durch die genannten Temperaturbereiche wird ein Mittenrauwert Rₐ der Folie A nach dem Querrecken zwischen 0,05 µm und 0,12 µm, insbesondere zwischen 0,06 µm und 0,09 µm erzeugt.

Bei S4 wird die Folie A von der Casting-Unit 14 zur Längsreckanlage 16 gefördert.

In der Längsreckanlage 16 durchläuft die Folie A zunächst den Vorheizbereich 28, in der eine Temperatur von gleich oder größer 110°C, insbesondere gleich oder größer 120°C herrscht, aber eine Temperatur kleiner als 155°C, insbesondere kleiner oder gleich 145°C.

Entsprechend hat die Folie A beim Verlassen des Vorheizbereich 28 eine Temperatur von 110°C oder mehr, insbesondere 120°C oder mehr, aber weniger als 155°C, insbesondere weniger als 145°C.

Die Folie A wird somit vorgeheizt (S5).

In dem Reckbereich 30 herrscht eine Temperatur von mehr als 140°C, insbesondere mehr als 150°C und weniger oder gleich als 165°C, insbesondere weniger oder gleich 155°C, die als Temperatur der Folie A in diesem Bereich angegeben ist. Das heißt, dass die Temperatur der Walzen so gewählt ist, dass die Folie A die angegebene Temperatur annimmt.

Anschließend wird die Folie A in ihre Längsrichtung, also in Abzugsrichtung bzw. Bewegungsrichtung, gereckt (S6). Der Hauptreckspalt S₁ ist auf eine Größe G₁ von wenigstens 30 mm, insbesondere von 50 mm oder mehr, oder auch 100 mm oder mehr eingestellt.

Der Nebenreckspalt S₂ hat eine Größe G₂ von 4 mm und weniger, insbesondere von 2 mm und weniger und ist somit kleiner als der Hauptreckspalt S₁, insbesondere um wenigstens eine Größenordnung.

Die Folie A wird zunächst über den Hauptreckspalt S₁ und anschließend über den Nebenreckspalt S₂ geführt und dort jeweils gereckt. Denkbar ist jedoch auch, dass zunächst über den Nebenreckspalt, d.h. einen kleineren Reckspalt, gereckt wird und anschließend über einen Hauptreckspalt, d.h. einen größeren Reckspalt.

Die Rotationsgeschwindigkeiten der Reckwalzen 40 des ersten Paares an Reckwalzen sind so gewählt, d.h. die Rotationsgeschwindigkeit der nachlaufenden Reckwalze 40 ist derart größer, dass das Reckverhältnis über dem Hauptreckspalt S₁ größer oder gleich 3,4, insbesondere größer oder gleich 3,6 ist. Denkbar sind ebenfalls Reckverhältnisse von größer oder gleich 4,0, insbesondere von größer oder gleich 4,5. Für größere Reckverhältnisse werden insbesondere größere Größen G₁ des Hauptreckspalts S₁ gewählt.

Nach dem Recken über den Hauptreckspalt S₁ ist die Folie A in Längsrichtung länger sowie dünner.

Er wird anschließend über den Nebenreckspalt S₂ gereckt, wobei die Rotationsgeschwindigkeiten der Reckwalzen 40 des zweiten Paares an Reckwalzen so gewählt sind, dass das Reckverhältnis in Längsrichtung über den Nebenreckspalt S₂ kleiner oder gleich 2 ist, insbesondere kleiner oder gleich 1,5, weiter insbesondere kleiner oder gleich 1,2.

Beispielsweise entspricht die Rotationsgeschwindigkeit der vorlaufenden Reckwalze 40 des zweiten Paares an Reckwalzen 40 der Rotationsgeschwindigkeit der nachlaufenden Reckwalze 40 des ersten Paares an Reckwalzen 40.

Die Rotationsgeschwindigkeit der nachlaufenden Reckwalze 40 des zweiten Paares an Reckwalzen 40 ist größer als die der entsprechenden ersten Reckwalze 40 und bestimmt die Herstellungsgeschwindigkeit der Folie A bzw. der Maschinengeschwindigkeit der Anlage 10.

Diese Laufgeschwindigkeit, die durch die Rotationsgeschwindigkeit der nachlaufenden Reckwalze 40 des zweiten Paares an Reckwalzen 40 bestimmt wird, liegt beispielsweise zwischen 100 m/min und 400 m/min.

Beispielsweise ist das Reckverhältnis MDx des gesamten Längsreckens, d.h. über beide Reckspalten S₁, S₂ größer als 3,5, insbesondere größer als 4,0, weiter insbesondere größer oder gleich 5,0.

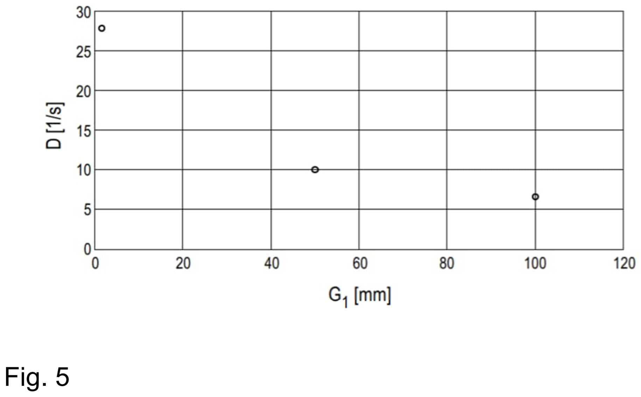

Diese hohe Reckverhältnis MDx der an sich spröden Folien aus PP und COC wird durch den deutlich vergrößerten Hauptreckspalt S₁ ermöglicht, wie aus der nachfolgenden Tabelle 1 sowie dem Diagramm der Figur 5 hervorgeht.

**Tabelle 1**

| G1 [mm] | MDx | TDx | E |
|---|---|---|---|
| 1,5 | 3,5 | 9 | + |
| | 3,75 | 9 | - |
| 30 | 3,5 | 9 | + |
| | 3,75 | 9 | + |
| | 4 | 9 | - |
| 50 | 3,5 | 9 | + |
| | 3,75 | 9 | + |
| | 4 | 9 | + |
| | 4,25 | 9 | - |
| 100 | 3,5 | 9 | + |
| | 3,75 | 9 | + |
| | 4 | 9 | + |
| | 4,5 | 9 | + |
| | 5 | 9 | + |
| | 5,3 | 9 | - |

Die Tabelle zeigt die Ergebnisse vier verschiedener Versuchsreihen, die bei unterschiedlich Größen G₁ des Hauptreckspalts S₁ durchgeführt wurden. Innerhalb jeder Versuchsreihe wurde das Reckverhältnis MDx der Längsreckung von 3,5 beginnend schrittweise erhöht, wobei die anschließende Querreckung mit dem konstanten Reckverhältnis TDx von 9 durchgeführt wurde.

In der letzten Spalte ist das Ergebnis E dahingehend dargestellt, ob eine intakte Folie (+) erhalten wurde - die ggf. noch nicht vollständig ausgereckt war - oder eine beschädigte Folie (-), zum Beispiel eine gerissene Folie. Der höchste Wert des Reckverhältnis MDx gibt das maximale Reckverhältnis an. An diesem ist die Folie A ausgereckt.

Gut zu erkennen ist, dass ab einer Größe G₁ des Hauptreckspalts S₁ von 30 mm das maximale Reckverhältnis MDx der Längsreckung über 3,5 hinaus gesteigert werden kann. Weitere Steigerungen des Reckverhältnis MDx der Längsreckung können durch eine weitere Vergrößerung der Größe G₁ des Hauptreckspalts S₁ erreicht werden.

Die Vergrößerung des Reckverhältnis MDx der Längsreckung ist dadurch möglich, dass der vergrößerte Hauptreckspalt S₁ zu einer verringerten Dehngeschwindigkeit D (Henky Geschwindigkeit) der Folie A über den Hauptreckspalt S₁ führt, wie in Figur 5 dargestellt ist. Figur 5 zeigt die Dehngeschwindigkeit D in Abhängigkeit der Größe G₁ des Hauptreckspalts S₁. Durch die niedrigeren Dehngeschwindigkeit D ist somit ein starkes Recken (MDx > 3,5) auch spröder Folien möglich.

Es ist denkbar, dass die Längsreckanlage 16 mehr als zwei Paar Reckwalzen 40 aufweist, sodass weitere Nebenreckspalte gebildet werden.

Nach dem Längsrecken wird die Folie von der Längsreckanlage 16 zur Querreckanlage 18 gefördert (S7).

In der Querreckanlage 18 wird die Folie entsprechend in Querrichtung gereckt (S8).

Das Reckverhältnis in Querrichtung der Querreckanlage 18 liegt bei gleich oder mehr als 8, insbesondere bei gleich oder mehr als 8,5 und/oder bei weniger als 10, insbesondere bei gleich oder weniger als 9,5. Beispielsweise liegt das Reckverhältnis in Querrichtung bei 9.

Das Flächenreckverhältnis, d.h. das Reckverhältnis in Längs- und Querrichtung liegt bei mehr als 35, insbesondere bei mehr als 40.

Nach dem Querrecken ist die Folie A beispielsweise weniger als 5 µm, insbesondere gleich oder weniger als 4 µm dick. Zugleich ist die Folie größer oder gleich 2 µm dick.

Beispielsweise hat die Folie A nach dem Querrecken eine Dicke von 3,8 µm.

Nach dem Querrecken hat die Folie A eine Breite zwischen 5 m und 13 m.

Zum Querrecken kann der Ofen 25 in der Reckzone eine Temperatur zwischen 170°C und 175°C haben.

Von der Querreckanlage 18 wird die Folie A zur Behandlungsvorrichtung 20 gefördert.

Die Behandlungsvorrichtung 20 aktiviert eine oder beide Flächen der Folie A mittels Corona-Behandlung (S9).

Anschließend wird die Folie A in der Wickelvorrichtung 24 aufgewickelt (S10).

Auf diese Weise ist somit eine Folie A, die wenigstens eine Lage mit 70 Gew.-% Polypropylen und zwischen 10 Gew.-% und 30 Gew.-% eines oder mehrerer Cycloolefinpolymere aufweist, durch sequentielles Recken, d.h. durch Längsrecken und anschließendes Querrecken, hergestellt.

**Tabelle 2**

| | PP [Gew.- %] | COC [Gew.- %] | Tg [°C] | Art | G₁ | MDx | FRV | d [µm] |
|---|---|---|---|---|---|---|---|---|
| 1 | 80 | 20 | 138 - 142 | seq. | 1-2mm | 3,5 | 31,5 | 4 |
| 2 | 80 | 20 | 138 - 142 | seq. | 50mm | 4,5 | 36 | 3,9 |
| 3 | 80 | 20 | 138 - 142 | seq. | 100mm | 5 | 45 | 3,8 |
| 4 | 80 | 20 | 138 - 142 | sim. | - | - | 49,5 | 3,8 |

Die Tabelle 2 zeigt vier Beispiele von hergestellten Folien, wobei die Beispiele 2 und 3 erfindungsgemäß wie zuvor beschrieben hergestellt sind.

Alle Folien weisen 80 Gew.-% Polypropylen (PP) und 20 Gew.-% eines Cycloolefinpolymers (COC) auf. Die Glasübergangstemperatur (Tg) des COC ist angegeben, genauso wie die Art der Verstreckung (Art), d.h. ob die Folie durch sequentielle Verstreckung (seq.) oder simultane Verstreckung (sim.) in Längs- und Querrichtung hergestellt wurde. Zudem sind das erreichte Reckverhältnis ins Längsrichtung (MDx), das erreichte Flächenreckverhältnis (FRV) und die Dicke (d) der hergestellten Folie angegeben.

Zur Herstellung der Folien gemäß der ersten drei Beispiele wurde eine sequentielle Verstreckung gewählt, d.h., dass die Verstreckung in Längsrichtung und die Verstreckung in Querrichtung getrennt voneinander mit zeitlichem Abstand erfolgen, z.B. in zwei verschiedene Anlagenteilen der gleichen Linie. Das vierte Beispiel dient als Vergleichsbeispiel, und die Folie wurde mittels einer Simultanreckanlage gleichzeitig in Längs- und in Querrichtung verstreckt.

Die Größe G₁ des Hauptreckspalts S₁ ist für die ersten drei Beispiele angegeben, die Größe G₂ des Nebenreckspalts S₂ betrug 1-2 mm.

Die übrigen Parameter sind für die Herstellung der Folien gemäß Beispielen 1 bis 3 unverändert geblieben und betrugen 95°C der Kühlwalze, des Vorheizbereichs 28 der Längsreckanlage 16 und 170°C bis 175°C in der Reckzone des Ofens 25 der Querreckanlage 18.

Die Folie des Beispiels 4 ist mit einem Längsreckverhältnis von 5,5 hergestellt worden.

Gut zu erkennen ist, dass die Erhöhung des Reckverhältnisses MDx in Längsrichtung zu einem deutlich höheren Flächenreckverhältnis FRV führt. Durch das hohe erreichte Flächenreckverhältnis in den Beispielen 2 und 3 verbessern sich auch die Eigenschaften der Folie A, beispielsweise die Durchschlagsspannung BDV, wie in der nachfolgenden Tabelle 3 zu sehen ist:

**Tabelle 3**

| Beispiel | Rauheit (TD) | | Schrumpf (120°C/5min) | | BDV [V/µm] |
|---|---|---|---|---|---|
| | Ra [µm] | Rmax [µm] | MD [%] | TD [%] | |
| 1 | 0,08 | 0,9 | 1,8 | 0 | 493 |
| 2 | 0,06 | 0,6 | 2,0 | 0 | 499 |
| 3 | 0,09 | 1,1 | 2,2 | 0 | 531 |
| 4 | 0,09 | 0,9 | 1,6 | 0 | 544 |

In Tabelle 3 sind die Eigenschaften der auf diese Weise enthaltenen Folien aufgeführt, nämlich der Mittenrauwert (Ra), die maximale Rauheit (Rmax), der Schrumpf nach Längs- (MD) und Querreckung (TD), sowie die Durchschlagsspannung (BDV; Break Down Voltage).

Die Folien der Beispiele haben einen Wärmeschrumpf in Längsrichtung von höchstens 5%, insbesondere höchstens 2,5%, und in Querrichtung von höchstens 0,5%, insbesondere höchstens 0,05%, gemessen nach ISO 11501 bei 120°C nach 5 Minuten.

Gut zu erkennen ist, dass mittels des erfindungsgemäßen Verfahrens auch durch sequentielles biaxiales Verstrecken Foliendicken von weniger als 4 µm erzeugt werden können.

Gleichzeitig geht aus den Tabellen 2 und 3 klar hervor, dass das Flächenreckverhältnis und die Eigenschaften der erfindungsgemäß hergestellten Folien (Beispiele 2 und 3), insbesondere die geringe Rauigkeit und die hohe Durchschlagsspannung, an die Eigenschaften von Folien heranreichen, die durch simultanes verstrecken erzeugt wurden (Beispiel 4). Solche simultan verstreckten Folien gelten als Qualitätsmaßstab.

Somit können durch das erfindungsgemäße Verfahren nun Folien mit der Qualität von simultan verstreckten Folien hergestellt werden, jedoch zu geringeren Kosten, da die Folie sequentiell verstreckt wird und Folienherstellungsanlagen, welche Folie sequentiell verstrecken, in der Anschaffung sowie im Unterhalt deutlich günstiger sind als Simultanreckanlagen.

Die Beispiele 2 und 3 sind äußerst stabil in der Produktion, sodass Lauflängen solcher Folien von über 30.000 m möglich sind.

Aufgrund der hohen Durchschlagsspannungen sind die mit dem erfindungsgemäßen Verfahren hergestellten Folien als Dielektrikum in Kondensatoren einsetzbar. Solche Kondensatoren genügen auch den hohen Anforderungen im Bereich Automotive oder Elektromobilität im Allgemeinen. Weitere Gegenstände der vorliegenden Erfindung sind somit eine erfindungsgemäß hergestellte Folie, insbesondere eine einseitig oder beidseitig metallisierte Folie, sowie die Verwendung dieser Folie als Dielektrikum zur Herstellung von Kondensatoren.

## Patentansprüche

1. Verfahren zum Herstellen einer Folie (A), das wenigstens die folgenden Schritte umfasst:
- Erzeugen einer Folie (A), die wenigstens eine Lage mit 70 Gew.-% eines oder mehrerer teilkristalline alpha-Olefinpolymere und zwischen 10 Gew.-% und 30 Gew.-% eines oder mehrerer Cycloolefinpolymere aufweist, und
- Längsrecken der Folie (A) mittels einer Längsreckanlage (16) mit wenigstens einem Paar an Reckwalzen (40), wobei ein Hauptreckspalt (S₁) zwischen den Reckwalzen (40) des wenigstens einen Paares an Reckwalzen (40) gebildet ist, wobei der Hauptreckspalt (S₁) eine Größe von wenigstens 30 mm hat.

2. Verfahren nach Anspruch 1, **dadurch gekennzeichnet, dass** die Folie (A) wenigstens 75 Gew.-% des einen oder der mehreren teilkristallinen alpha-Olefinpolymere und zwischen 15 Gew.-% und 25 Gew.-% des einen oder der mehreren Cycloolefinpolymere aufweist.

3. Verfahren nach Anspruch 1 oder 2, **dadurch gekennzeichnet, dass** die Längsreckanlage (16) ein zweites Paar an Reckwalzen (40) aufweist, wobei ein Nebenreckspalt (S₂) zwischen den Reckwalzen (40) des zweiten Paares an Reckwalzen (40) gebildet ist, wobei der Nebenreckspalt (S₂) eine geringere Größe als der Hauptreckspalt (S₁) hat, und
wobei die Folie (A) beim Längsrecken zunächst über den Hauptreckspalt (S₁) und anschließend über den Nebenreckspalt (S₂) in seine Längsrichtung gereckt wird, oder umgekehrt.

4. Verfahren nach einem der vorhergehenden Ansprüche, **dadurch gekennzeichnet, dass** der Hauptreckspalt (S₁) eine Größe von 50 mm und mehr, insbesondere von 100 mm und mehr hat, und/oder wobei der Nebenreckspalt (S₂) eine Größe von 4 mm und weniger, insbesondere von 2 mm und weniger hat.

5. Verfahren nach einem der vorhergehenden Ansprüche, **dadurch gekennzeichnet, dass** das Reckverhältnis in Längsrichtung über den Hauptreckspalt (S₁) größer oder gleich 3,4 ist, insbesondere größer oder gleich 3,6 ist, weiter insbesondere größer oder gleich 4,0 ist, weiter insbesondere größer oder gleich 4,5 ist; und/oder dass das Reckverhältnis in Längsrichtung über den Nebenreckspalt (S₂) kleiner oder gleich 2 ist, insbesondere kleiner oder gleich 1,5 ist, weiter insbesondere kleiner oder gleich 1,2.

6. Verfahren nach einem der vorhergehenden Ansprüche, **dadurch gekennzeichnet, dass** die Folie (A) frei von Additiven ist; und/oder
**dadurch gekennzeichnet, dass** wenigstens eines, mehrere oder alle der Polypropylene teilkristallin und/oder ein Homopolymer ist.

7. Verfahren nach einem der vorhergehenden Ansprüche, **dadurch gekennzeichnet, dass** wenigstens eines, mehrere oder alle der Cycloolefinpolymere amorph sind, eine Glasübergangstemperatur zwischen 130°C und 180°C haben, und/oder Norbornen und Ethylen als Monomere enthalten.

8. Verfahren nach einem der vorhergehenden Ansprüche, **dadurch gekennzeichnet, dass** die Längsreckanlage (16) einen Vorheizbereich (28) aufweist, wobei die Temperatur im Vorheizbereich (28) gleich oder größer als 110°C, insbesondere gleich oder größer als 120°C ist, und/oder gleich oder kleiner als 155°C, insbesondere gleich oder kleiner als 145°C ist; und/oder
dass die Längsreckanlage (16) einen Reckbereich (30) aufweist, wobei die Temperatur im Reckbereich (30) gleich oder größer als 140°C, insbesondere gleich oder größer als 150°C ist, und/oder gleich oder kleiner als 165°C, insbesondere gleich oder kleiner als 155°C ist.

9. Verfahren nach einem der vorhergehenden Ansprüche, **dadurch gekennzeichnet, dass** die Folie (A) nach der Längsreckanlage (16) mit einer Laufgeschwindigkeit zwischen 100 m/min und 400 m/min gefördert wird.

10. Verfahren nach einem der vorhergehenden Ansprüche, **dadurch gekennzeichnet, dass** das Verfahren zusätzlich Folgendes umfasst:
- Fördern der Folie (A) von der Längsreckanlage (16) zu einer Querreckanlage (18), und
- Querrecken der Folie in der Querreckanlage (18),
insbesondere wobei die Folie (A) nach dem Querrecken eine Breite von 5 m bis 13 m und/oder eine Dicke von weniger als 5 µm, insbesondere von gleich oder weniger als 4 µm hat.

11. Verfahren nach Anspruch 10, **dadurch gekennzeichnet, dass** das Reckverhältnis in Querrichtung der Querreckanlage (18) bei gleich oder mehr als 8, insbesondere bei gleich oder mehr als 8,5 liegt, und/oder bei gleich oder weniger als 10, insbesondere bei gleich oder weniger als 9,5, weiter insbesondere liegt das Reckverhältnis in Querrichtung der Querreckanlage (18) bei 9, und/oder
**dadurch gekennzeichnet, dass** die Querreckanlage (18) einen Ofen zum Vorheizen der Folie (A) vor dem Querrecken aufweist, insbesondere wobei die Temperatur im Ofen zumindest abschnittsweise zwischen 170°C und 175°C ist.

12. Verfahren nach einem der vorhergehenden Ansprüche, **dadurch gekennzeichnet, dass** die Folie (A), insbesondere nach dem Querrecken, einen Mittenrauwert zwischen 0,05 µm und 0,12 µm, insbesondere zwischen 0,06 µm und 0,09 µm aufweist.

13. Verfahren nach einem der vorhergehenden Ansprüche, **dadurch gekennzeichnet, dass** das Verfahren zusätzlich Folgendes umfasst:
- Extrudieren der Folie (A) auf eine Kühlwalze, und
- Fördern der Folie (A) von der Kühlwalze zur Längsreckanlage (16),
insbesondere wobei die Kühlwalze temperiert ist auf eine Temperatur im Bereich von 80°C - 100°C, insbesondere im Bereich von 90°C - 95°C.

14. Verfahren nach einem der vorhergehenden Ansprüche, **dadurch gekennzeichnet, dass** das Verfahren zusätzlich zumindest eines der folgenden, insbesondere nach dem Längs- und/oder Querrecken der Folie, umfasst:
- Aktivieren der Oberfläche mittels Coronabehandlung, und/oder
- Aufwickeln der Folie (A).

15. Anlage zur Herstellung einer Folie (A) mit einer Längsreckanlage (16), wobei die Längsreckanlage (16), insbesondere die Anlage (10), dazu eingerichtet ist, ein Verfahren gemäß einem der vorhergehenden Ansprüche durchzuführen.
